# EUROPÄISCHE PATENTANMELDUNG

(11) **EP 1 930 668 A2**
(43) Veröffentlichungstag der Anmeldung: **11.06.2008**
(21) Anmeldenummer: 07023468.7
(22) Anmeldetag: 04.12.2007
(51) Int. Cl.: F24J 2/52, H01L 31/042, F16B 2/24, F16B 7/04

(54) **Montageschienensystem**

(30) Priorität: 04.12.2006 DE 202006018426 U; 03.01.2007 DE 202007000309 U
(71) Anmelder: IDEEMATEC Deutschland GmbH, 94574 Wallerfing (DE)
(72) Erfinder: Kufner, Johann, 94527 Aholming / Tabertshausen (DE)
(74) Vertreter: Schirdewahn, Jürgen

(57) **Zusammenfassung**

Die vorliegende Erfindung betrifft ein Montageschienensystem (1, 23, 42, 56, 65) zur Halterung von Gegenständen, insbesondere Flächenkörpern, wie Solarmodule (53) oder Solarkollektoren, umfassend:
a) mindestens ein schienenartiges Profil (2, 24, 45) mit mindestens zwei in Längsrichtung des schienenartigen Profils verlaufenden Profilleisten (4, 4a, 30, 48) und
b) mindestens ein federelastisches Klammerelement (3, 25, 31, 35, 39, 44, 57, 67, 78) zur Befestigung des schienenartigen Profils auf einem Untergrund und / oder zur Halterung von Gegenständen am schienenartigen Profil mit mindestens zwei sich gegenüberstehenden, an einander gegenüberliegenden Seiten des schienenartigen Profils angreifenden Federschenkeln (7, 26, 32, 38, 43, 58, 66a, 66b), die mit jeweils einer der Profilleisten so zusammenwirken, dass das federelastische Klammerelement am schienenartigen Profil federelastisch fixierbar ist.

## Beschreibung

Die vorliegende Erfindung betrifft ein Montageschiensystem zur Halterung von Gegenständen, insbesondere Flächenkörpern, wie Solarmodule oder Solarkollektoren.

Die aus dem Stand der Technik bekannten Montageschienen zur Befestigung von Flächenkörpern, wie z.B. Solarmodulen oder Solarkollektoren, werden mittels Schraubverbindungen an einem gewünschten Untergrund befestigt. Hierzu weisen diese Schienen Aufnahmekanäle auf, die zum Teil in allen vier Seiten in Längsrichtung der Schiene eingebracht sind. Diese Aufnahmekanäle sind meist so gewählt, dass sich rechteckig geformte oder rautenförmige Schraubenmuttern sowie Hammerkopfschrauben in diese Kanäle einbringen und verankern lassen.

Mit Hilfe von Verbindungselementen wie Haltewinkel oder Klemmen lassen sich diese Schienen befestigen und auch untereinander verbinden.
Ein Nachtteil der aus dem Stand der Technik bekannten Montageschienen besteht darin, dass durch die längslaufenden Aufnahmekanäle das Profil in seiner Geometrie statisch ungünstig wird und zugleich ein höherer Materialeinsatz nötig ist. Dadurch steigen die Kosten des Schienenmaterials. In der Produktion verteuert sich das Produkt auf Grund der auszuformenden Profilkammern und die unterschiedlichen in die Schienen einzubringenden Materialstärken.
Zudem wird das Verbauen dieser Systeme durch die schräge Ebene der Dachhaut erschwert. Viele Verbindungen müssen an der Schiene von unten nach oben, insbesondere mit minimalem Abstand zur Dachhaut, verbaut werden. Es erfordert viel Mühe die zum Teil lose eingefädelten Nutensteine (Vierkantmuttern) punktgenau mit der Schraube zu erfassen, ohne dass diese gesehen werden können.
Ein weiterer Nachteil der genannten Schienen aus dem Stand der Technik besteht in der durch die Aufnahmekanäle zerklüftete Oberfläche der Profile, die Schmutz und Wasser aufnimmt, was bei Frost zu starken Deformierungen führt und Schäden begünstigt.

Eine andere Form der Montage ist die projektbezogene Fertigung, bei der das Schienenmaterial im Vorfeld oder auf der Baustelle punktgenau verbohrt und verschraubt werden muss. Der Einsatz von Halfenschienen z.B. erfordert ein aufwendiges, durchgehendes Lochen des Profilbodens, was ebenfalls die Statik schwächt.

Ein weiterer entscheidender Nachteil von allen derzeit bekannten Systemen ist das aufwendige Verbinden der Profile, das zum Teil viele Bauteile und etliche Werkzeuge erfordert, die vom Monteur an schwierigen Einsatzorten mitgeführt werden müssen.

Der vorliegenden Erfindung liegt die Aufgabe zu Grunde, ein Montageschienensystem zur Halterung von Gegenständen, insbesondere Flächenkörpern, wie beispielsweise Solarmodule oder Solarkollektoren, zur Verfügung zu stellen, welches die Nachteile des Standes der Technik überwindet. Insbesondere soll eine Montageschiene zur Verfügung gestellt werden, die mit wenig Material gefertigt ist und damit leicht gehalten ist, statisch ausreichend dimensioniert bleibt und schnell, mit sehr geringem Werkzeugeinsatz verbaut werden kann.

Diese Aufgabe wird gelöst durch ein Montageschienensystem mit den Merkmalen des Anspruchs 1.

Durch die spezielle Anordnung von mindestes zwei in Längsrichtung eines schienenartigen Profils verlaufenden Profilleisten, die mit Federschenkeln eines federelastischen Klammerelements zusammenwirken, wird beispielsweise erreicht, dass das schienenartige Profil (Montageschiene) auf einem Untergrund federelastisch, ohne Einsatz vom Befestigungsmitteln, wie z.B. Schrauben, befestigt werden kann. Hierzu kann das federelastische Klammerelement an verschiedenen Trägerelementen angebracht werden. Dies kann beispielsweise durch Vernieten geschehen.

Bei einer bevorzugten Ausführungsform des erfindungsgemäßen Montageschienensystems weist dieses zur Befestigung des schienenartigen Profils ein federelastisches Klammerelement mit mindestens zwei sich gegenüberstehenden, an einander gegenüberliegenden Seiten des schienenartigen Profils angreifende Federschenkel auf, die jeweils mindestens eine federelastische Rastlasche aufweisen, die mit jeweils einer der Profilleisten derart zusammenwirken, dass das schienenartige Profil zwischen den Federschenkeln des federelastischen Klammerelements fixierbar ist, und die mit dem jeweiligen Federschenkel des Klammerelements einen spitzen Innenwinkel einschließen. In dieser Ausführungsform ist das federelastische Klammerelement vorzugsweise bereits an einem Untergrund, auf welchem die Montageschiene befestigt werden soll, befestigt. Ein Befestigen der Schiene auf dem Untergrund erfolgt dann in einfacher Weise durch Aufstecken der Montageschiene (schienenartiges Profil) auf das federelastische Klammerelement. Ein fester Halt der Montageschiene im federelastischen Klammerelement wird sowohl durch die federnden Eigenschaften der Federschenkel, die federelastisch in Richtung der Montageschiene vorgespannt sind, als auch durch die Rastlaschen, die mit den Profilleisten zusammenwirken, bewerkstelligt. Hierbei wird ein Teil der horizontalen Kräfte durch eine formflüssige Verbindung aufgenommen. Die anderen Kräfte werden über das federelastische Klammerelement in einem sehr günstigen Winkel abgeleitet. Dadurch wird das Klammerelement vorwiegend auf Druck und Zug belastet und Beanspruchung auf Biegung gering gehalten.

Mit Vorteil ist das schienenartige Profil im Querschnitt viereckig, insbesondere rechteckig, ausgeführt. Im Gegensatz zu den aus dem Stand der Technik bekannten Montageschienen ist diese einfache, viereckige Form wesentlich materialsparender und damit leichter.
Vorzugsweise ist das schienenartige Profil als Hohlprofil ausgeführt. Auch dies trägt maßgeblich zur Materialeinsparung und damit zur Gewichtsreduzierung des schienenartigen Profils bei.
Vorzugsweise ist das schienenartiges Profil aus Leichtmetall, insbesondere Aluminium, gefertigt. Auch dies trägt zu einer Gewichtsreduzierung des schienenartigen Systems bei.

Mit Vorteil weist das schienenartige Profil vier Profilleisten auf. Mit Vorteil sind die Profilleisten an den Kanten des, insbesondere quaderförmigen, schienenartigen Profils angeordnet. Durch das Vorsehen von vier Profilleisten an den vier Kanten des Profils wird gewährleistet, dass das Profil von allen vier Seiten mit dem Klammerelement verbunden werden kann. Mit Vorteil ist das schienenartige Profil einsückig ausgebildet und die Profilleisten sind Bestandteil des Profils. Dies gewährleistet eine einfache Herstellbarkeit sowie Stabilität des schienenartigen Profils.

Vorzugsweise geht jeweils mindestens eine, vorzugsweise zwei, Seitenfläche einer Profilleiste über einen stumpfen Winkel in eine Flanke der Profilleiste über. Um bei üblichen Produktionstoleranzen der Verbindungsteile und des Profils den Klemmeffekt zu gewährleisten, erfolgt die Klemmung des federelastischen Klammerelements auf dieser Seitenfläche, die eine schräge Ebene darstellt. Gegen diese schräge Ebene wirkt die Federkraft der federelastischen Rastlasche, womit ein ständiges Nachstellen der Klemmverbindung gewährleistet wird.

Bei einer bevorzugten Ausführungsform des erfindungsgemäßen Montageschienenssystems schließen die Federschenkel des federelastischen Klammerelements mit einer Basis des federelastischen Klammerelements einen Innenwinkel von weniger als 90°, vorzugsweise 60°-85°, ein. Dies gewährleistet einen besonders stabilen Sitz des schienenartigen Profils im federelastischen Klammerelement.

Mit Vorteil weist das federelastische Element krallenförmige Elemente auf, welche insbesondere in Richtung des schienenartigen Profils federelastisch vorgespannt sind und sich an dieses andrücken. Diese krallenförmigen Elemente tragen auch zu einem stabilen Sitz des Profils im federelastischen Klammerelement bei.

Mit Vorteil weisen die Federschenkel des federelastischen Klammerelements einen nach außen gebogen Bereich auf. Dieser Bereich dient der besseren Aufnahme des schienenartigen Profils im federelastischen Klammerelement (zwischen die beiden Federschenkel).

Vorzugsweise weisen die federelastischen Rastlaschen Krallen auf. Diese Krallen tragen auch zu einem stabilen Sitz des schienenartigen Profils (Element) bei.

Bei einer weiteren Ausführungsform des erfindungsgemäßen Montageschienensystems weist das federelastische Klammerelement mindestens einen Auflageabschnitt zum Auflegen von zu haltenden Flächenkörpern auf, wobei der mindestens eine Auflageabschnitt vorzugsweise mindestens teilweise gezackt ausgebildet ist. Diese Ausführungsform dient insbesondere der Halterung und Fixierung von Gegenständen, wie z.B. Solarmodulen
Bei einer weiteren Ausführungsform des erfindungsgemäßen Montageschienensystems ist dem federelastischen Klammerelement ein, vorzugsweise mindestens teilweise gezacktes, Fixierelement zur Halterung eines Gegenstandes zwischen einem Auflageabschnitt des federelastischen Klammerelements und dem Fixierelement zugeordnet ist, welches mit dem federelastischen Klammerelement lösbar verbindbar ist. Die Verbindung zwischen dem federelastischen Klammerelements und dem Fixierelement kann sowohl formschlüssig (z.B. Verschraubung) als auch kraftschlüssig erfolgen.

Bei einer weiteren Ausführungsform des erfindungsgemäßen Montageschienensystems weist das federelastische Klammerelement ein, vorzugsweise mindestens teilweise gezacktes, Fixierelement zur Halterung und Fixierung von Gegenständen, wie z.B. Solarmodulen, auf und ist mit diesem einstückig verbunden. Durch die federelastischen Eigenschaften des federelastische Klammerelements in Verbindung mit dem Fixierelement ist eine extrem einfache, nahezu werkzeuglose Montage möglich.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

### In den Zeichnungen zeigen:

- Figur 1:: einen Querschnitt eines erfindungsgemäßen Montageschienensystems mit einer Aluschiene, welche in einem Klammerelement fixiert ist;
- Figur 2:: Werkzeug zum Lösen der Aluschiene aus dem Klammerelement von Figur 1;
- Figur 3:: eine Darstellung einer Fixiervorrichtung für das erfindungsgemäße Montageschienensystem mit zwei Klammerelementen;
- Figur 4:: eine perspektivische Darstellung einer weiteren Ausführungsform eines erfindungsgemäßen Montageschienensystems mit zwei, rechtwinklig zueinander angeordneten Aluschienen;
- Figur 5:: Seitenansicht des in Figur 4 gezeigten Klammerelements;
- Figur 6:: Grundriss des aus einem Teil geformten Klammerelements aus den Figuren 4 und 5;
- Figur 7:: eine perspektivische Darstellung einer Ausführungsform eines erfindungsgemäßen Klammerelements, mit dem der Aufbau einer rechtwinkligen Rahmenkonstruktion aus Aluprofilen möglich ist;
- Figur 8:: perspektivische Darstellung eines weiteren erfindungsgemäßen Klammerelements, das eine Schienenverbindung in variabler Winkeleinstellung ermöglicht;
- Figur 9:: perspektivische Darstellung einer weiteren Ausführungsform eines erfindungsgemäßen Klammerelements, welches eine variable Winkeleinstellung ermöglicht;
- Figur 10:: perspektivische Darstellung eines Schienenaufbaues mit Klammerelementen aus den Figuren 7 und 8;
- Figur 11:: einen Querschnitt durch eine weitere Ausführungsform des erfindungsgemäßen Montageschienensystems, wobei das federelastische Klammerelement zur Halterung von Solarmodulen ausgebildet ist;
- Figur 12:: eine Seitenansicht des erfindungsgemäßen Montageschienensystems aus Figur 11 mit befestigten Solarmodulen;
- Figur 13:: eine Querschnittsdarstellung durch eine weitere Ausführungsform des erfindungsgemäßen Montagesystems, welches ebenfalls ein Klammerelement zur Fixierung von Solarmodulen aufweist;
- Figur 14:: eine Seitenansicht des Montageschienensystems nach Figur 13 mit fixierten Solarmodulen;
- Figur 15:: einen Querschnitt durch eine weitere Ausführungsform des erfindungsgemäßen Montageschienensystems ebenfalls mit einem Klammerelement zur Fixierung von Solarmodulen;
- Figur 16:: eine Seitenansicht des Montageschienensystems nach Figur 15 mit fixierten Solarmodulen;
- Figur 17:: eine perspektivische Darstellung des federelastischen Klammerelements aus den Figuren 15 und 16;
- Figur 18:: eine perspektivische Darstellung einer weiteren Ausführungsform eines erfindungsgemäßen Klammerelements mit hakenförmigen Rastlaschen.
- Figur 19:: eine weitere geeignete Ausführungsform eines federelastischen Klammerelements;
- Figur 20:: eine Draufsicht auf das Klammerelement 25 aus Figur 6 nachdem im Zentrum der Bodenfläche eine kreuzförmige Ausstanzung vorgenommen wurde;
- Figur 21:: eine Seitenansicht von Figur 20;
- Figur 22:: eine perspektivische Darstellung einer Fixiervorrichtung für ein erfindungsgemäßes Montageschienensystem mit einem Klammerelement;
- Figur 23:: eine perspektivische Darstellung einer weiteren Fixiervorrichtung für ein erfindungsgemäßes Montageschienensystem für die Aufnahme von zwei Klammerelementen;
- Figur 24:: eine perspektivische Darstellung eines Werkzeuges zum Lösen einer Aluschiene eines erfindungsgemäßen Montageschienensystems;
- Figur 25:: eine perspektivische Darstellung einer Aluschiene mit einem Aufnahmekanal für Nutensteine.

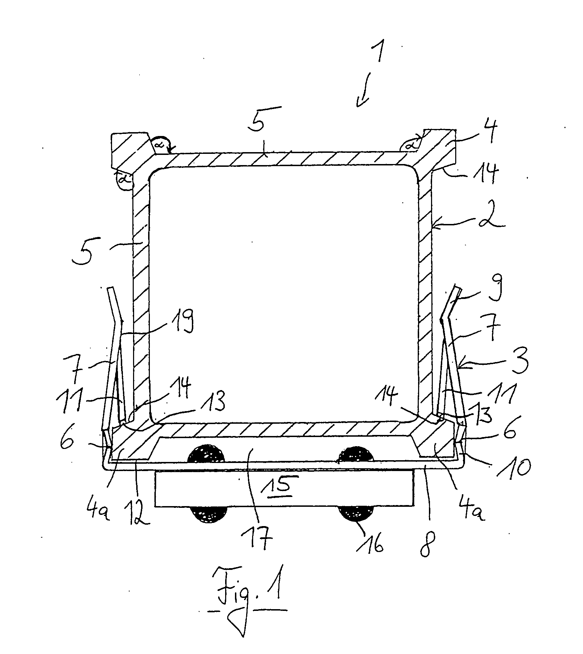

Figur 1 zeigt einen Querschnitt durch ein erfindungsgemäßes Montageschienensystem 1 mit einer als Hohlprofil mit quadratischem Querschnitt ausgeführten Montageschiene 2 aus Aluminium. Ein weiterer Bestandteil des Montageschienensystems 1 ist ein federelastisches Klammerelement 3. An den vier Ecken der Montageschiene 2 ist jeweils eine Profilleiste 4, 4a angebracht, die in ihrer Position den statischen Aufbau der Montageschiene 2 begünstigt. Die Profilleisten 4, 4a sind eckig ausgebildet, wobei zwei ihrer Seitenflächen mit den jeweils an sie angrenzenden Profilseitenwänden 5 einen stumpfen Winkel bilden. Der Winkel ist in der Zeichnung mit a bezeichnet. Die Montageschiene 2 wird durch das Klammerelement 3 zwischen dessen Federschenkel 7 aufgenommen und darin fixiert. Dabei nimmt das Klammerelement 3 die Montageschiene 2 im Bereich der unteren Profilleisten 4 im Wesentlichen formschlüssig auf. Um ein Durchgleiten des Aluprofils nach vorne und hinten zu verhindern, sind an den vier Außenkanten des Klammerelements kleine krallenförmige Ecken 6 ausgeformt, die sich wie Widerhacken in die Montageschiene 2 pressen, falls ein Zug auf die Verbindung ausgeübt wird. Diese krallenförmigen Ecken 6 sind unter Vorspannung leicht nach innen gebogen und somit immer auf der Montageschiene 2 anliegend. Das Klammerelement 3 weist zwei Federschenkel 7 auf. Die Federschenkel 7 schließen mit einer Basis 8 des Klammerelements 3 einen leicht spitzen Innenwinkel ein, und sind nach innen (in Richtung der Montageschiene) federelastisch vorgespannt. Um die Montageschiene 2 leicht einsetzen zu können, ist der obere Bereich 9 der Federschenkel 7 leicht nach außen geformt und erfasst beim Einsetzen beide Profilleisten 4a. Durch das Andrücken der Montageschiene 2 auf die gebogenen Bereiche 9 der Federschenkel 7 werden diese auseinander gedrückt und die Montageschiene 2 kann bis zur Basis 8 des Klammerelements 3 geschoben werden. Dort kann es, wie bereits oben dargelegt, in den Ecken des U-förmigen Grundes 10 des Klammerelements 3 im wesentlichen formschlüssig aufgenommen werden. Um einen äußerst stabilen Sitz der Montageschiene im Klammerelement 3 zu gewährleisten, weisen die Federschenkel 7 elastische Rastlaschen 11 auf, die mit den Federschenkeln 7 einen spitzen Winkel einschließen und in Richtung der Montageschiene ausgeformt sind. Diese Rastlaschen 11 sind in der vorliegenden Ausführungsform einstückig mit den Federschenkeln 7 verbunden und sind somit Bestandteil von diesen. Beim Einschieben der Montageschiene 2 in das Klammerelement 3 werden die Rastlaschen 11 nach außen gedrückt. Liegen die planen Außenflächen 12 der Profilleisten 4a auf der Basis 8 des Klammerelements 3 auf, haben die Profilleisten 4a die Rastlaschen 11 freigegeben. Nun schieben sich beidseitig die verzahnten Unterkanten 13 der Rastlaschen 11 auf die schrägen Seitenflächen 14 und klemmen die Montageschiene 2 im Klammerelement 3 fest indem sie sich in die Profilleisten 4a hineinspreizen. Auch die krallenförmigen Ecken 6 werden durch das Einpressen der Montageschiene 2 in das Klammerelement 3 auseinandergedrückt, um mit Vorspannung an den Profilleisten 4a der Montageschiene 2 anzuliegen. Wird die Aluschiene 2 durch mechanische Einflüsse oder beispielsweise Temperaturschwankungen im Klammerelement 3 gelockert, können sich die Rastlaschen 11 auf der schrägen Seitenfläche 14 nachstellen und die o.g. Einflüsse ausgleichen. Das Klammerelement 3 kann wahlweise an verschiedenen Trägern 15 angebracht werden. Im vorliegenden Fall ist das Klammerelement 3 mit Hilfe von Nieten 16 am Träger 15 befestigt. Der Hohlraum 17 der sich durch die Profilleisten 4a zwischen den Profilseitenwänden 5 und der Basis 8 bildet, bietet Platz für die Nieten 16 oder beispielsweise andere Befestigungsmittel (z.B. Schraubenköpfe).

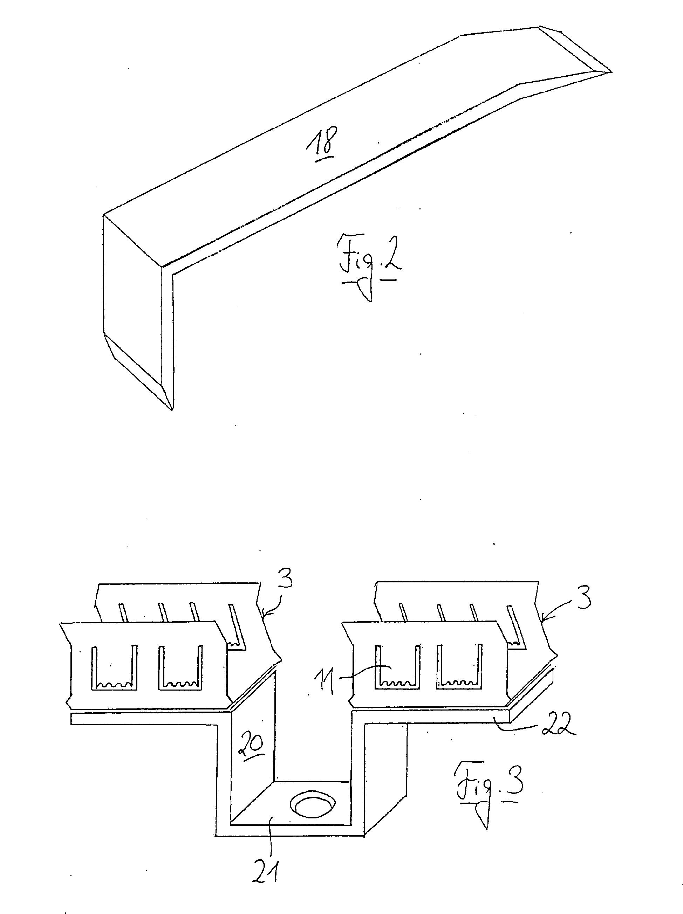

Figur 2 zeigt ein Montagewerkzeug 18, das zur Demontage der Montageschiene 2 aus dem Klammerelement 3 von Figur 1 dient. Damit die Federschenkel 7 bei der Demontage nicht zu weit nach außen gedrückt werden und somit ihre Federkraft verlieren, ist das Montagewerkzeug 18 in seiner Materialstärke so gewählt, dass es exakt dem Höhenunterschied zwischen der unteren Außenfläche 12 der Profilleisten 4 und Außenfläche der Profilseitenwände 5 entspricht. Wird nun das Montagewerkzeug 18 zwischen eine Profilseitenwand und die Innenseite 19 seines Federschenkels 7 geschoben, werden die Rastlaschen 11 soweit nach außen gedrückt, dass die Montageschiene 2 freigegeben wird und mit dem Montagewerkzeug 18 nach oben entnommen werden kann. Da bei dieser Methode die Federschenkel 7 und die Rastlaschen 11 nur auf ein gewisses Maß auseinandergedrückt werden, ist ein Überdehnen des Klammerelements 3 nicht möglich und es kann wieder eingesetzt werden. Das Montagewerkzeug 18 ist so ausgeformt, dass beide Enden so angeschrägt und abgewinkelt sind, dass ein handlicher Einsatz begünstigt wird.

Figur 3 zeigt ein Fixierelement 20 zur Befestigung eines erfindungsgemäßen Montageschienensystems, wobei das Fixierelement 20 Klammerelemente 3, wie sie in der Figur 1 beschrieben sind, aufweist. Mit Hilfe der Klammerelemente 3 können wiederum Montageschienen fixiert werden. Um eine Höhenverstellung (wie z. B. bei der Stockschraube möglich) zu ermöglichen, ist hier die gebohrte Fläche 21 nach unten versetzt, um dem Gewindeüberstand bis zur Montageschiene Platz zu bieten. Bezüglich dieses Fixierelements 20 kann das komplette Montageschienensystem inklusive Montageschienen und Klammerelementen auf einem Untergrund befestigt (beispielsweise verschraubt) werden. Die Klammerelemente 3 sind in der vorliegenden Ausführungsform auf die nach oben versetzten Flächen 22 genietet.

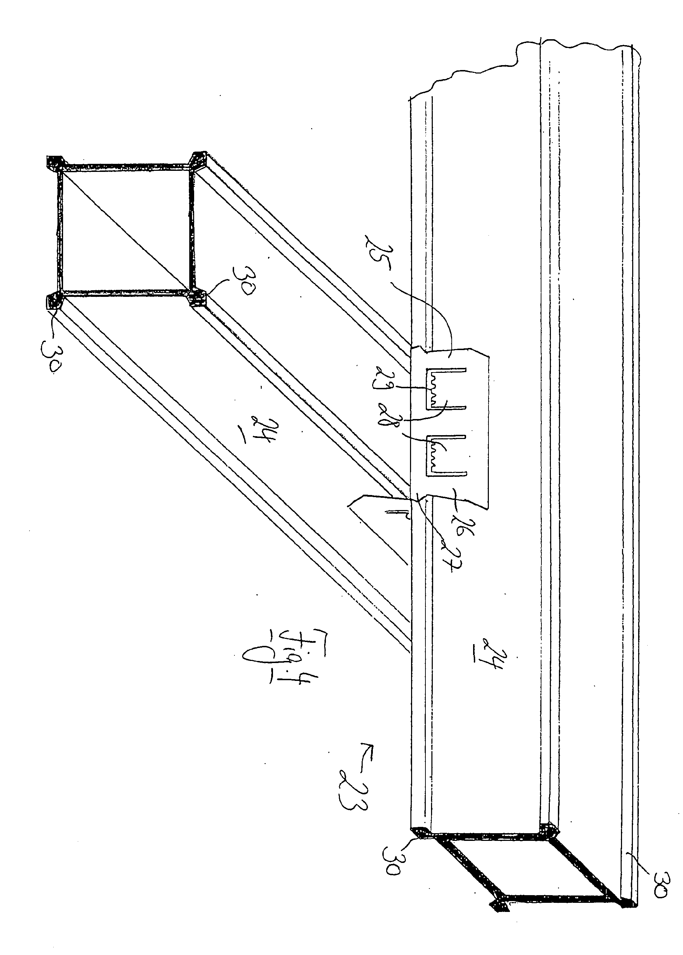

Figur 4 zeigt eine perspektivische Darstellung einer weiteren Ausführungsform 23 eines erfindungsgemäßen Montageschienensystems, wobei die Montageschienen 24 im rechten Winkel zueinander fixiert sind. Das Klammerelement 25 weist im vorliegenden Fall vier Federschenkel 26 auf, wobei hier nur zwei Federschenkel zu sehen sind. Die krallenförmigen. Ecken 27 verhindern ein Durchrutschen der Montageschienen 24 im Klammerelement 25. Wie das Klammerelement 3 in Figur 1 weist auch das Klammerelement in der vorliegenden Figur vier Rastlaschen 28 auf. Jeder der vier Federschenkel 26 weist zwei Rastlaschen 28 auf. Auch diese Rastlaschen weisen eine verzahnte Unterkante 29 auf. Das Zusammenspiel der Federschenkel und der Rastlaschen mit den Montageschienen, insbesondere den Profilleisten 30 der Montageschienen 24, funktioniert analog dem des Montageschienensystems 1 aus Figur 1. Die jeweils benachbarten Federschenkel 26 des Klammerelements 25 weisen in entgegengesetzte Richtungen.

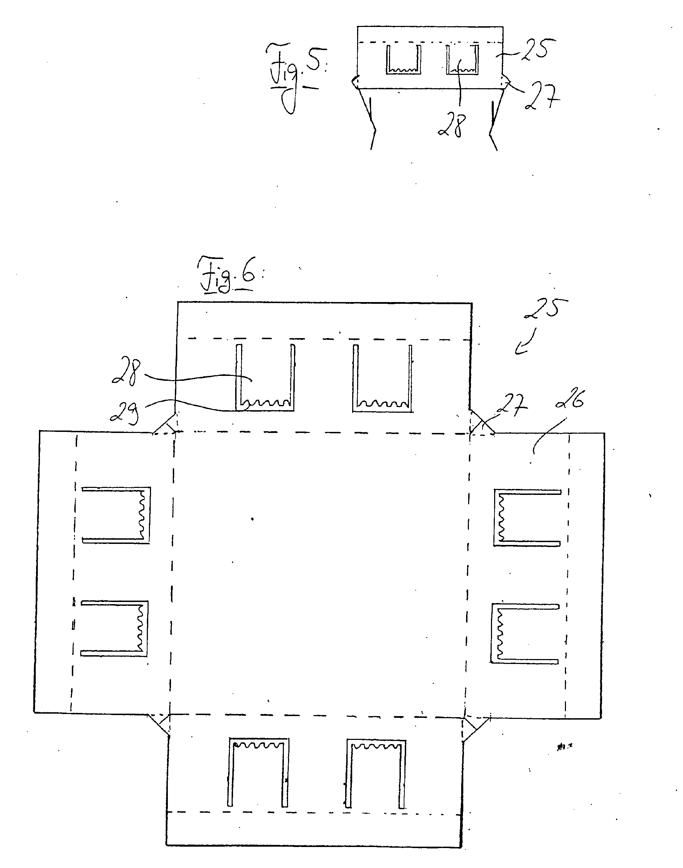

Figur 5 zeigt eine Seitenansicht des Klammerelements 25 aus Figur 4. Zu sehen sind wiederum die Rastlaschen 28 sowie die krallenförmigen Ecken 27.

Figur 6 zeigt eine Draufsicht auf das Klammerelement 25 aus den Figuren 4 und 5 nach dem Zuschnitt und bevor das Bauteil gekantet wurde. Die gestrichelten Linien markieren die nachfolgenden Kantungen.
Die gegenüberliegenden krallenförmigen Ecken 27 verhindern ein Durchrutschen der Montageschiene im Klammerelement 25. Die gezahnten Unterkanten 29 der Rastlaschen 28 halten die Montageschiene gegen die Horizontalkräfte und Vertikalkräfte.

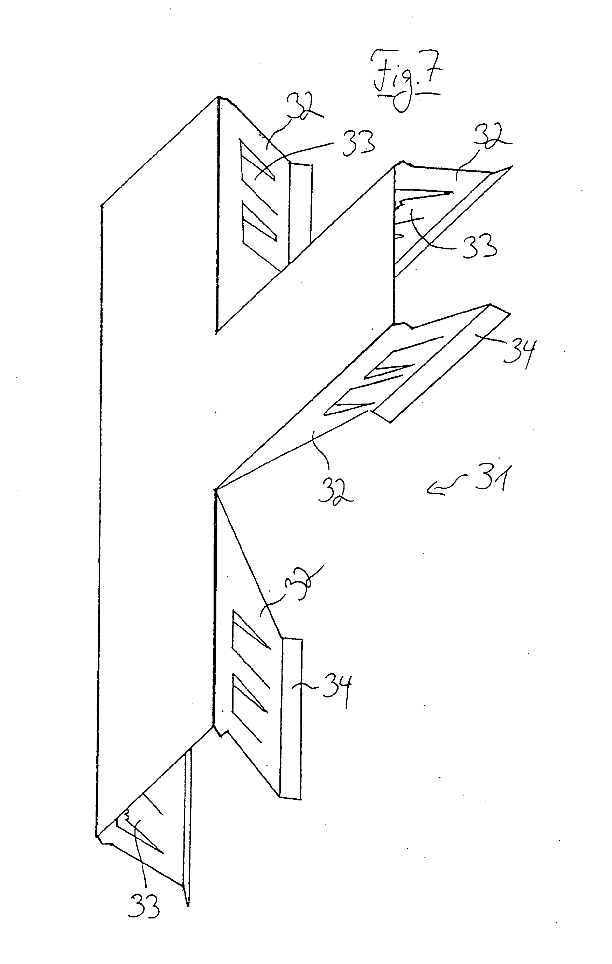

Figur 7 zeigt die perspektivische Darstellung einer weiteren Ausführungsform eines Klammerelements 31, die den Aufbau einer winkligen Rahmenkonstruktion aus Aluprofilen ermöglicht. Dieses Klammerelement 31 ist T-förmig ausgebildet. Dieses Klammerelement 31 ermöglicht eine seitliche Anbindung einer Profilschiene an einer zweiten Profilschiene im rechten Winkel. Die Federschenkel 32 dieses Klammerelements 31 weisen wiederum Rastlaschen 33 auf, die mit den Federschenkeln 32 einen spitzen Winkel einschließen. Ebenfalls zusehen sind gebogene Bereiche 34 der Federschenkel 32 zur vereinfachten Aufnahme einer Montageschiene.

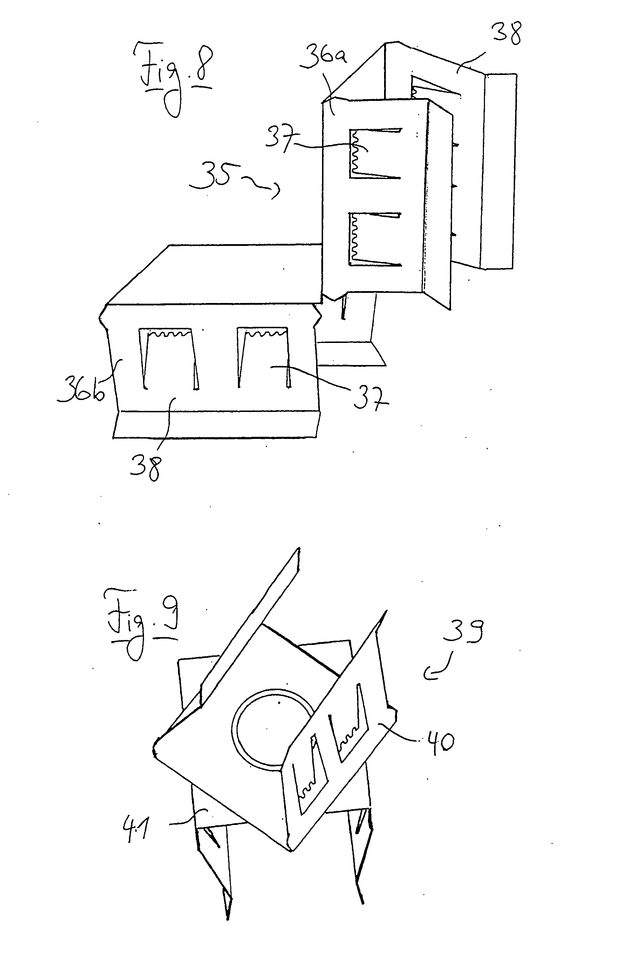

Figur 8 zeigt eine perspektivische Darstellung einer weiteren Ausführungsform 35 eines Klammerelements, welches eine Schienenverbindung in variabler Winkeleinstellung ermöglicht. Das Klammerelement 35 weist zwei über eine Kantung (hier nicht gezeigt) verbundene Elementabschnitte (36a, 36b) auf. Die Kantung zwischen diesen Elementabschnitten kann als Scharnier genutzt werden. Da das durchgehende Ausgangsmaterial federnde Eigenschaften besitzt, lassen sich somit Schienen in einem variablen Winkel zueinander verbinden. Auch das Klammerelement 35 weist Rastlaschen 37 auf, welche in die Federschenkel 38 des Klammerelements 35 eingebracht sind.

Figur 9 zeigt ein Klammerelement 39, das aus 2 Elementabschnitten 40, 41 besteht, die mit ihrer Grundfläche übereinander liegen und drehbar verbunden sind. Somit lässt sich ein variabler Winkel im Kreuzverband herstellen.

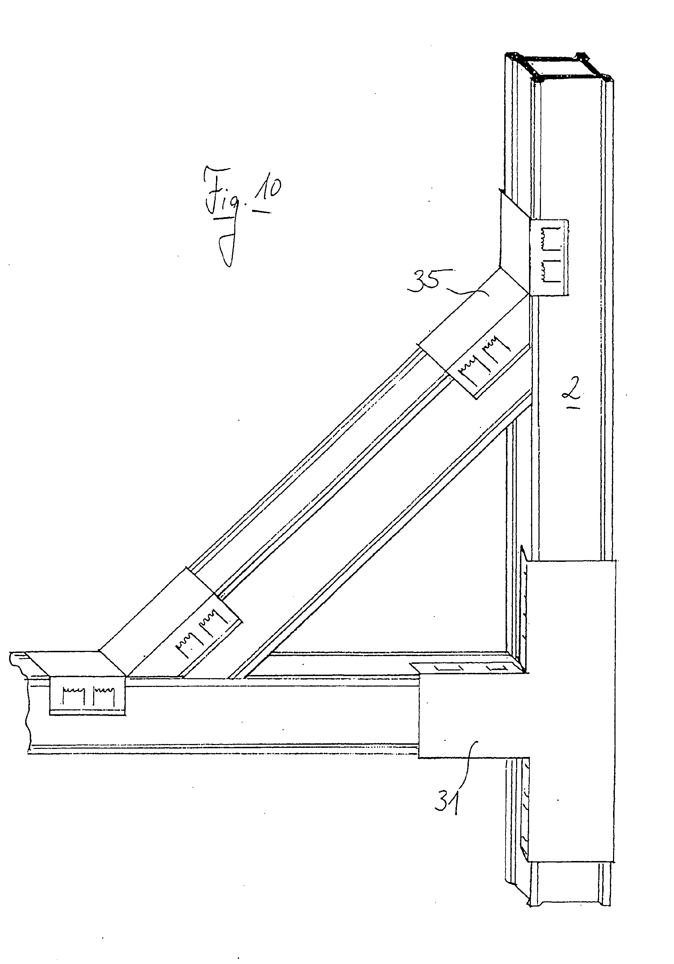

Figur 10 zeigt eine perspektivische Darstellung eines Schienenaufbaus mit Klammerelementen aus den Figuren 7 und 8.

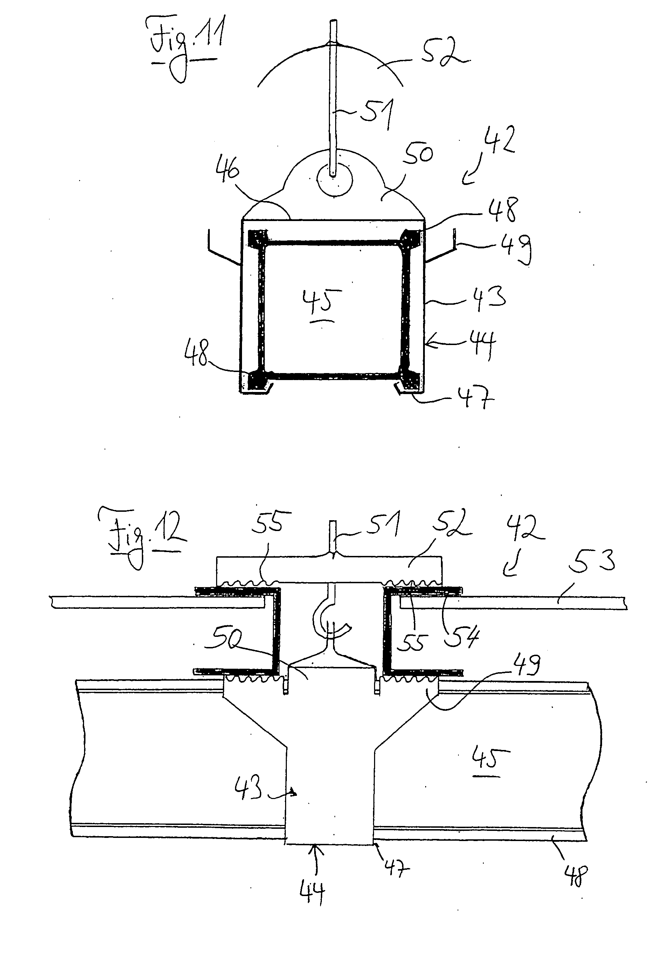

Figur 11 zeigt einen Querschnitt durch eine weitere Ausführungsform eines erfindungsgemäßen Montageschienensystems 42, welches der Fixierung eines Solarmoduls dient. Bei dieser Ausführungsform erstrecken sich die Federschenkel 43 des Klammerelements 44 jeweils über die gesamte Breite einer im Querschnitt quadratisch ausgebildeten Montageschiene 45. Die Federschenkel 43 gehen aus einer Basis 46 des Klammerelements 44 hervor und weisen an einem unteren Ende Haken 47 auf. Diese Haken 47 sind an die Form der Profilleisten 48 der Schiene 45 angepasst und können in diese eingehakt werden. Auf diese Art und Weise kann das Klammerelement 44 an der Schiene 45 fixiert werden.
Zur Halterung eines zu haltenden Solarmoduls weist das Klammerelement Haltekrallen 49 auf, auf die das Solarmodul aufgelegt werden kann und die federnd auf den Modulrahmen von unten drücken und somit ein Abrutschen des Moduls verhindern. Auf der Basis 46 des Klammerelements 44 ist ein Haltebügel 50 vorgesehen. Durch einen Haltehaken 51, welcher im Haltebügel 50 eingehakt ist, wird das Klammerelement 44 mit einer Modulklemme 52 verbunden.

Figur 12 zeigt eine Seitenansicht des Montageschienensystems 42 nach Figur 11, bei der Solarmodule 53 mit deren Alurahmen 54 auf der Aluschiene 45 befestigt sind. Durch das hakenförmige Ende des Haltehakens 51 lässt sich die Modulklemme 52 am oberen Teil des Haltebügels 50 einhängen. Die Modulklemme 52, die aus einem federnden Material gefertigt ist, hat an ihren Außenkanten eine Verzahnung 55, die sich im Modulrahmen 54 verkeilt. Die Modulklemme 52 wird über den Haltebügel 50 geschoben oder ist bereits vormontiert. Mittels eines Werkzeugs, ähnlich einer Blindnietzange, wird nun der überstehende Teil des Haltehakens 51 über der Modulklemme 52 erfasst und entgegen der Modulklemme 52 nach oben gezogen. Dadurch wird der Modulrahmen 54 auf das Aluprofil 45 gedrückt, die gezahnten Oberkanten der Haltekrallen 49 pressen sich gegen den vorgegebenen Federdruck von unten in den Modulrahmen 54 und die gezahnte Unterkante der in sich federnden Modulklemme 52 drückt von oben auf den Modulrahmen 54. Die Verriegelung der Modulklemme 52 mit dem Haltehaken erfolgt über eine Klemmung. Das Loch in der Modulklemme 52 ist kleiner als der Durchmesser des Haltehakens 51 und das Material ist vom Bohrloch aus sternförmig geschlitzt. Dadurch wird die Lochleibung beim Durchdringen des runden Haltehakens 51 becherförmig nach oben ausgeformt und verkeilt sich nach dem Spannvorgang.

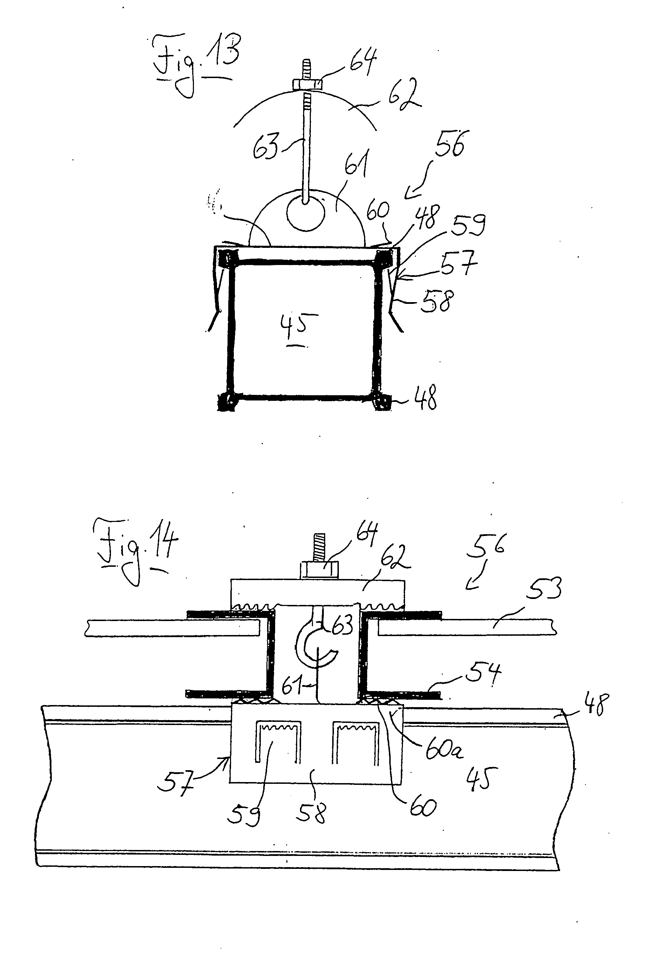

Figur 13 zeigt einen Querschnitt durch eine weitere Ausführungsform eines Montageschienensystems 56, wobei dieselbe Aluschiene 45 wie in der Ausführungsform in Figur 11 und 12 verwendet wurde. Auch diese Ausführungsform 56 dient der Fixierung von Solarmodulen. Die Form des Klammerelements 57 des Montageschienensystems 56 entspricht im Prinzip der Form des Klammerelements der Ausführungsform von Figur 1. So weist auch das Klammerelement 57 Federschenkel 58 mit integrierten Rastlaschen 59 auf, die mit der Form der Profilleisten 48 der Aluschiene 45 zusammenwirken und das Klammerelement auf der Schiene fixieren. Zum besseren Fixieren der Solarmodule weist das Klammerelement 57 kantige Ausformungen 60 auf, auf denen ein zu fixierendes Solarmodul aufgelegt wird. Zur endgültigen Fixierung eines Solarmoduls weist auch diese Ausführungsform einen Haltebügel 61 auf. Auch hier erfolgt die Fixierung der Solarmodule mit Hilfe einer Modulklemme 62 in Verbindung mit einem Haltehaken 63. Die Verriegelung der Modulklemme 62 mit dem Haltehaken 63 erfolgt hier durch ein Schraubgewinde mit einer Mutter 64.

Figur 14 zeigt eine Seitenansicht des Montageschienensystems 56 nach Figur 13 mit fixierten Solarmodulen 53. Hier ist gut der Auflagebereich (60a) mit den kantigen Ausformungen 60 zu erkennen.

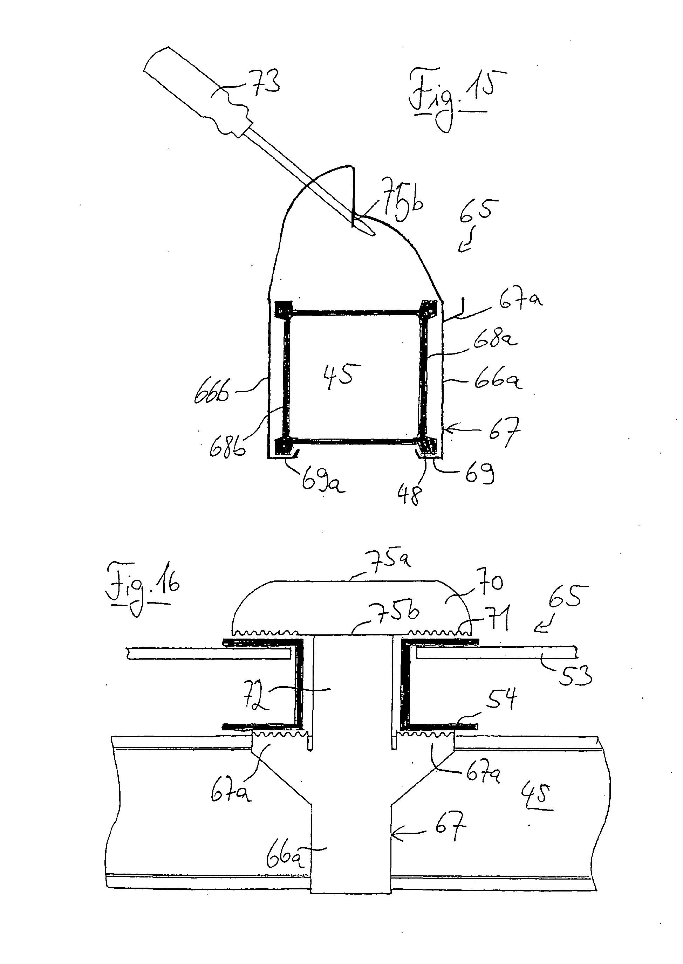

Figur 15 zeigt eine weitere Ausführungsform eines Montageschienensystems 65, welches ebenfalls für die Fixierung von Solarmodulen geeignet ist. Die hier verwendete Profilschiene 45 entspricht der Profilschiene aus den Figuren 11 bis 13. Ähnlich der Ausführungsform aus Figur 11 bzw. 12 erstrecken sich die Federschenkel 66 des Klammerelements 67 über die gesamte Höhe der Profilseitenwände 68a, 68b. Auch weisen die Federschenkel 66, 66a an ihrem unteren Ende Haken 69 zum Einhängen in die Profilleisten 48 auf. Beim Einhaken der Haken 69 in die Profilleisten 48 wird das Klammerelement an der Schiene 45 fixiert.

Figur 16 zeigt eine Seitenansicht des Montageschienensystems 65 aus Figur 15. Im Gegensatz zur Ausführungsform gemäß den Figuren 11 bzw. 12 erfolgt das Festklemmen der Solarmodule 53 nicht durch eine Modulklemme, die vom Klammerelement gelöst werden kann, sondern durch ein Klemmelement 70, welches mit dem Klammerelement 67 einstückig verbunden ist. Das Klemmelement 70 weist Zacken 71 an seiner Unterseite auf. Einer der beiden Federschenkel 66a geht direkt in einen Haltebügel 72 über, welcher mit dem Klemmelement 70 einstückig verbunden ist. Das Klemmelement 70 ist mit Federkraft vorgespannt. Die Vorspannung des Haltebügels 72, der durchgehend aus einem federnden Material gefertigt ist, wird dadurch erreicht, dass bei der Montage der Federschenkel 66a in die Profilleiste 48 der Aluschiene 45 eingehängt wird und dann der zweite Federschenkel 66b mittels eines Werkzeuges 73 (zum Beispiel Schraubenzieher), welches in eine Bohrung 74 hindurchgeführt wird und dessen Spitze sich an der Kante 75b abstützt, nach unten gedrückt wird bis der Haken 69a des Federschenkels 66b die Profilleiste 48 des Aluprofils 45 erfasst. Die Vorspannung erfolgt über die beiden Kantungen 75 im Haltebügel 72. Zum Auflegen des Solarmoduls 53 weist das Klammerelement gezackte Auflagebereiche 67a auf.

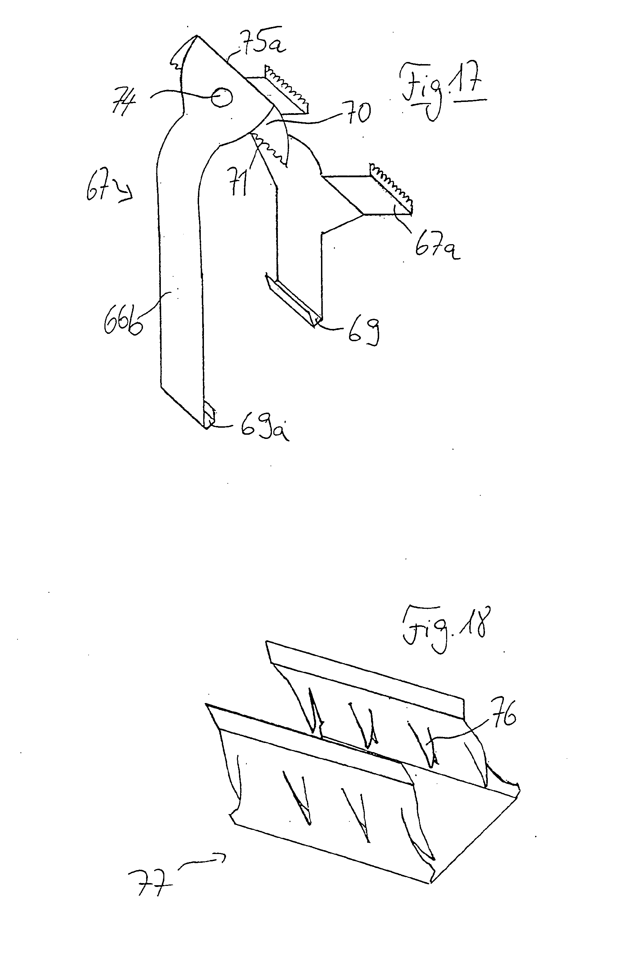

Figur 17 zeigt das Klammerelement aus Figur 16.

Figur 18 zeigt ein Klammerelement 77 ähnlich dem in Figur 1. Die Rastlaschen 76 sind hier jedoch als Krallen 76 ausgeführt.

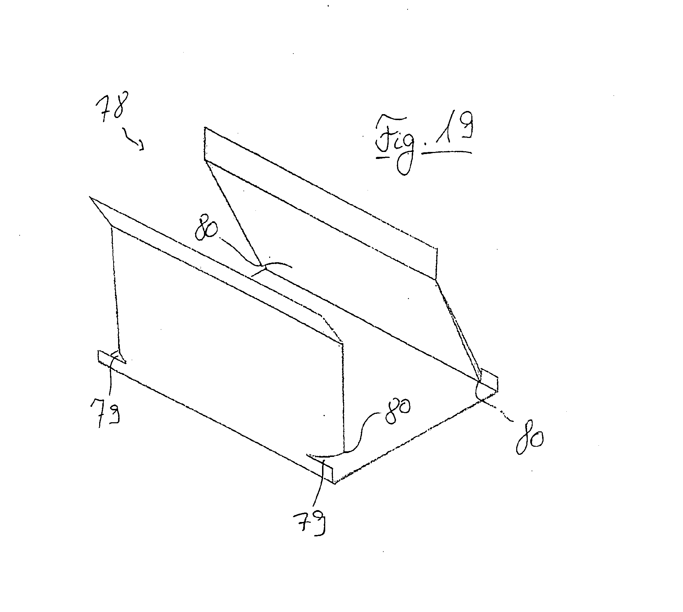

Figur 19 zeigt eine weitere geeignete Ausführungsform eines federelastischen Klammerelements 78. Dieses Klammerelement 78 weist an seinen Federschenkeln im unteren Bereich Schlitzungen 79 auf. Der Bereich über den Schlitzungen ist leicht nach innen geformt und bildet scharfe Ecken 80, die mit den (hier nicht dargestellten) Profilleisten eines Aluprofils beim Fixieren desselben zusammenspielen, indem sie sich in das Aluminium krallen.

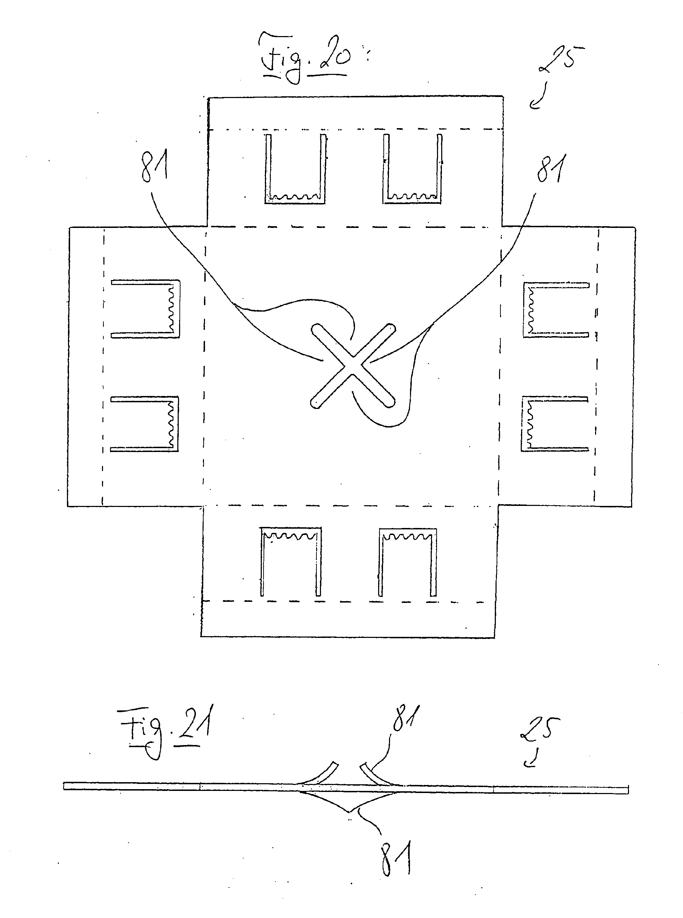

Figur 20 zeigt eine Draufsicht auf das Klammerelement 25 aus Figur 6 nachdem im Zentrum der Bodenfläche eine kreuzförmige Ausstanzung vorgenommen wurde. Dadurch entstehen vier, aufeinander zugewandte Ecken 81. Jeweils zwei sich gegenüberliegende Ecken werden nach oben bzw. nach unten gebogen und bilden dadurch scharfkantige Krallen, die sich beim Einsetzen eines Aluprofils in das Klammerelement in das Aluminium krallen und das Aluprofil noch fester fixieren.

Figur 21 zeigt eine Seitenansicht von Figur 20. Gut zu erkennen sind hier die nach oben bzw. unten gebogenen Ecken (Krallen) 81.

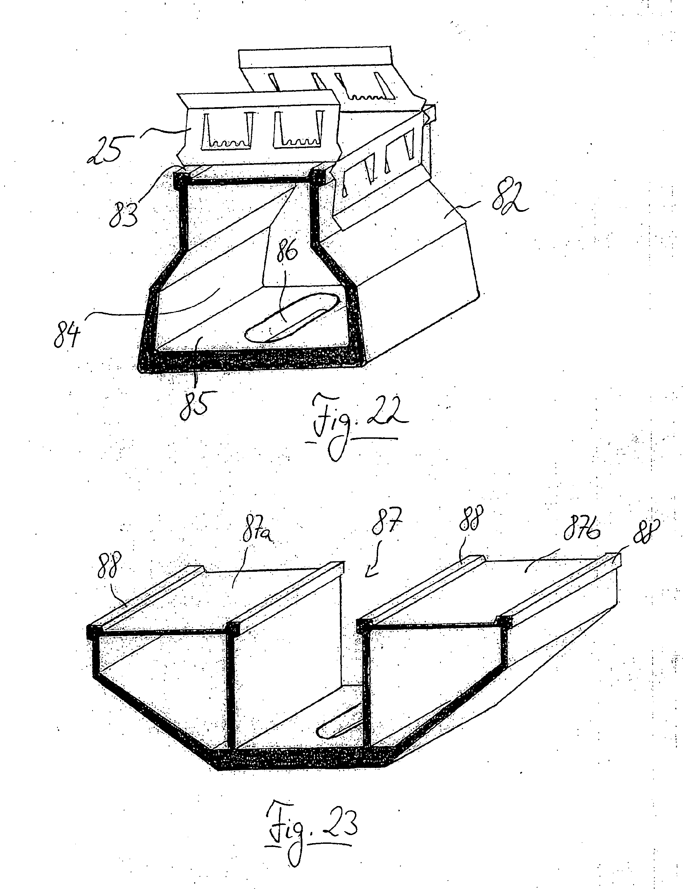

Figur 22 zeigt eine perspektivische Darstellung einer Fixiervorrichtung 82 für ein erfindungsgemäßes Montageschienensystem mit einem Klammerelement 25, die dazu dient, das erfindungsgemäße Montageschienensystem auf einem Untergrund zu befestigen. Die Fixiervorrichtung 82 ist hier aus einem Aluminiumstrangpressprofil gefertigt und weist in seinem oberen Bereich Profilleisten 83 auf, welche dieselbe Form aufweisen, wie die Profilleisten 4 der Montageschiene 2 aus der Figur 1. Dadurch ist es möglich, das Klammerelement 25 mit zwei seiner vier Federschenkel 26 auf der Fixiervorrichtung 82 zu befestigen. Diese Befestigung erfolgt auf dieselbe Art und Weise (selber Mechanismus), wie beispielsweise die Befestigung der Montageschiene 2 aus Figur 1 im Klammerelement 3 (siehe Beschreibung zu Figur 1).
Der untere Bereich der Fixiervorrichtung 82 ist derart ausgeformt, dass ein großvolumiger Innenbereich 84 entsteht. Dieser ermöglicht die Montage auf eine Stockschraube oder einer ähnlichen Verbindung zum Untergrund. Der Boden 85 der Fixiervorrichtung 82 ist stabil ausgeformt und weist mittig ein Langloch 86 auf, um beim Verschrauben am Untergrund ein Ausfluchten einer Montageschiene zu gewährleisten. Um einem Gewindeüberstand (z.B. einer Stockschraube) Platz zu bieten, ist das Hohlprofil, aus dem die Fixiervorrichtung 82 gefertigt ist, entsprechend hoch ausgeführt.

Figur 23 zeigt eine perspektivische Darstellung einer weiteren Fixiervorrichtung 87 für ein erfindungsgemäßes Montageschienensystem für die Befestigung von zwei Klammerelementen 25. Auch diese Fixiervorrichtung 87 dient zur Befestigung mindestens eines erfindungsgemäßen Montageschienensystems auf einem Untergrund.
Die Fixierung von Montageschienen (hier nicht dargestellt) erfolgt wiederum mit Klammerelementen 25 (hier nicht dargestellt), die auf die beiden Seitenteile 87a und 87b des Fixierelements 87 gesteckt und dadurch fixiert werden. Das Fixierelement 87 ist aus einem Hohlkammerstrangpressprofil aus Aluminium gefertigt. Ähnlich der Fixiervorrichtung 82 aus Figur 22 weist auch die Fixiervorrichtung 87 Profilleisten 88 zum Zusammenwirken mit Klammerelementen 25 und Befestigen derselben auf den Seitenteilen 87a und 87b auf.

Durch die Fixiervorrichtungen 82 bzw. 87 entfällt eine aufwendige Befestigung (z.B. durch Vernieten) der Klammerelemente auf einem Grundelement.

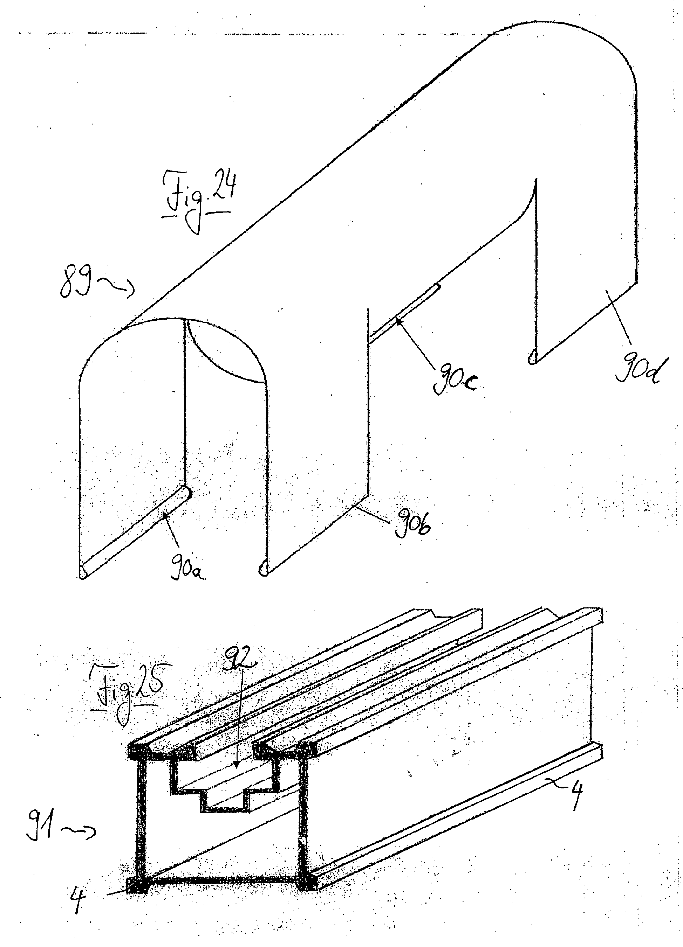

Figur 24 zeigt eine perspektivische Darstellung eines Werkzeuges 89 zur Demontage von vorzugsweise zwei nebeneinander eingesetzten Klammerelementen eines erfindungsgemäßen Montageschienensystems von der Montageschiene. Durch das Aufsetzen des Montagewerkzeugs 89 auf die Montageschiene können nur die vier Schenkel 90a - d zwischen die Montageschiene und die Klammerelemente geschoben werden. Der Lösemechanismus entspricht dem des Werkzeuges nach Figur 2 mit dem Unterschied, dass an mehreren Stellen angegriffen werden kann. Nach dem Lösen einer Montageschiene aus den Klammerelementen klemmt das Werkzeug 89 durch seine angepasste Form an der Montageschiene und kann vom Monteur bequem abgenommen werden.

Figur 25 zeigt eine perspektivische Darstellung einer Aluschiene 91 mit einem Aufnahmekanal 92 für Nutensteine. Bei der Schiene 91 handelt es sich um ein A-luminiumhohlkammerprofil, das in seiner Ausformung der Montageschiene 2 aus Figur 1 insoweit ähnlich ist, dass sämtliche Verbindungsvarianten mit den Klammerelementen möglich sind. So weist auch die Schiene 91 Profilleisten 4 auf.
Zudem ist hier ein Aufnahmekanal 92 für die Fixierung eines Nutensteins eingearbeitet, um den Übergang des erfindungsgemäßen Montageschienensystems zu den herkömmlichen Montageschienen und deren Befestigungskomponenten zu ermöglichen.

## Patentansprüche

1. Montageschienensystem (1, 23, 42, 56, 65) zur Halterung von Gegenständen, insbesondere Flächenkörpern, wie Solarmodule (53) oder Solarkollektoren, umfassend:
a) mindestens ein schienenartiges Profil (2, 24, 45) mit mindestens zwei in Längsrichtung des schienenartigen Profils verlaufenden Profilleisten (4, 4a, 30, 48) und
b) mindestens ein federelastisches Klammerelement (3, 25, 31, 35, 39, 44, 57, 67, 78) zur Befestigung des schienenartigen Profils auf einem Untergrund und / oder zur Halterung von Gegenständen am schienenartigen Profil mit mindestens zwei sich gegenüberstehenden, an einander gegenüberliegenden Seiten des schienenartigen Profils angreifenden Federschenkeln (7, 26, 32, 38, 43, 58, 66a, 66b), die mit jeweils einer der Profilleisten so zusammenwirken, dass das federelastische Klammerelement am schienenartigen Profil federelastisch fixierbar ist.

2. Montageschienensystem (1, 23, 42, 56, 65) nach Anspruch 1, **dadurch gekennzeichnet, dass** die Federschenkel (7, 26, 32, 38, 43, 58, 66a, 66b) des Klammerelements (3, 25, 31, 35, 39, 44, 57, 67, 78) jeweils mindestens eine federelastische Rastlasche (11, 28, 33, 37, 59, 76) aufweisen, die mit jeweils einer der Profilleisten (4, 4a, 30, 48) des schienenartigen Profils (2, 24, 45) so zusammenwirken, dass das schienenartige Profil im Klammerelement fixiert ist, und die mit dem jeweiligen Federschenkel des Klammerelements einen spitzen Innenwinkel einschließen.

3. Montageschienensystem (1, 23, 42, 56, 65) nach einem der Ansprüche 1 oder 2, **dadurch gekennzeichnet, dass** das schienenartige Profil (2, 24, 45) im Querschnitt viereckig, insbesondere rechteckig, ausgebildet ist.

4. Montageschienensystem (1, 23, 42, 56, 65) nach einem der vorhergehenden Ansprüche, **dadurch gekennzeichnet, dass** das schienenartige Profil (2, 24, 45) als Hohlprofil ausgebildet ist.

5. Montageschienensystem (1, 23, 42, 56, 65) nach einem der vorhergehenden Ansprüche, **dadurch gekennzeichnet, dass** das schienenartige Profil (2, 24, 45) aus Leichtmetall, insbesondere Aluminium, gefertigt ist.

6. Montageschienensystem (1, 23, 42, 56, 65) nach einem der vorhergehenden Ansprüche, **dadurch gekennzeichnet, dass** das schienenartige Profil (2, 24, 45) vier Profilleisten (4, 4a, 30, 48) aufweist.

7. Montageschienensystem (1, 23, 42, 56, 65) nach einem der vorhergehenden Ansprüche, **dadurch gekennzeichnet, dass** die Profilleisten (4, 4a, 30, 48) an den Kanten des, insbesondere quaderförmigen, schienenartigen Profils (2, 24, 45) angeordnet sind.

8. Montageschienensystem (1, 23, 42, 56, 65) nach einem der vorhergehenden Ansprüche, **dadurch gekennzeichnet, dass** das schienenartige Profil (2, 24, 45) einstückig, ausgebildet ist und die Profilleisen (4, 4a, 30, 48) Bestandteil des schienenartigen Profils sind.

9. Montageschienensystem (1, 23, 42, 56, 65) nach einem der vorhergehenden Ansprüche, **dadurch gekennzeichnet, dass** jeweils mindestens eine, vorzugsweise zwei, Seitenfläche (14) einer Profilleiste (4, 4a, 30, 48) über einen stumpfen Winkel in eine Flanke (5) des schienenartigen Profils (2, 24, 45) übergeht.

10. Montageschienensystem (1, 23, 42, 56, 65) nach einem der vorhergehenden Ansprüche, **dadurch gekennzeichnet, dass** die Federschenkel (7, 26, 32, 38, 43, 58, 66a, 66b) des federelastischen Klammerelements (3, 25, 31, 35, 39, 44, 57, 67, 78) mit einer Basis (8, 46) des federelastischen Klammerelements einen Innenwinkel von weniger als 90°, vorzugsweise 60° - 85°, einschließen.

11. Montageschienensystem (1, 23, 42, 56, 65) nach einem der vorhergehenden Ansprüche, **dadurch gekennzeichnet, dass** das federelastische Klammerelement (3, 25, 31, 35, 39, 44, 57, 67, 78) krallenförmige Elemente (6, 27) aufweist, welche insbesondere in Richtung des schienenartigen Profils (2, 24, 45) federelastisch vorgespannt sind und sich an dieses andrücken.

12. Montageschienensystem (1, 23, 42, 56, 65) nach einem der vorhergehenden Ansprüche, **dadurch gekennzeichnet, dass** die Federschenkel (7, 26, 32, 38, 43, 58, 66a, 66b) einen nach außen gebogenen Bereich (9, 34) aufweisen.

13. Montageschienensystem (1, 23, 42, 56, 65) nach einem der vorhergehenden Ansprüche, **dadurch gekennzeichnet, dass** die federelastischen Rastlaschen (11, 28, 33, 37, 59, 76) Fixierhilfen (13, 29), wie beispielsweise Krallen, aufweisen.

14. Montageschienensystem (1, 23, 42, 56, 65) nach einem der vorhergehenden Ansprüche, **dadurch gekennzeichnet, dass** das federelastische Klammerelement (3, 25, 31, 35, 39, 44, 57, 67, 78) mindestens einen Auflageabschnitt (49, 60a, 67a) zum Auflegen von zu haltenden Flächenkörpern (53) aufweist, wobei der mindestens eine Auflageabschnitt vorzugsweise mindestens teilweise gezackt ausgebildet ist.

15. Montageschienensystem (1, 23, 42, 56, 65) nach einem der vorhergehenden Ansprüche, **dadurch gekennzeichnet, dass** dem federelastischen Klammerelement ein, vorzugsweise mindestens teilweise gezacktes, Fixierelement (52, 62) zur Halterung eines Gegenstandes (53) zwischen einem Auflageabschnitt (49, 60a, 67a) des federelastischen Klammerelements (3, 25, 31, 35, 39, 44, 57, 67, 78) und dem Fixierelement zugeordnet ist, welches mit dem federelastischen Klammerelement lösbar verbindbar ist.

16. Montageschienensystem (1, 23, 42, 56, 65) nach einem der Ansprüche 1 bis 14, **dadurch gekennzeichnet, dass** das federelastische Klammerelement (3, 25, 31, 35, 39, 44, 57, 67, 78) ein, vorzugsweise mindestens teilweise gezacktes, Fixierelement (70) aufweist und mit diesem einstückig verbunden ist.
